# EUROPEAN PATENT APPLICATION

(11) **EP 2 836 049 A1**
(43) Date of publication of application: **11.02.2015**
(21) Application number: 13360016.3
(22) Date of filing: 09.08.2013
(51) Int. Cl.: H04W 76/02, H04W 84/04

(54) **Method, system and computer program product for managing cell radio network temporary identifiers**

(71) Applicant: ALCATEL LUCENT, 92100 Boulogne-Billancourt (FR)
(72) Inventor: Worrall, Chandrika K., Swindon, Sn5 7DJ (GB)
(74) Representative: Greenwood, Matthew David

(57) **Abstract**

A method, in a radio communication system, for managing Cell Radio Network Temporary Identifiers ("C-RNTI") for use by a user equipment in dual connectivity with a primary node and a secondary node of the system, comprising assigning at least one C-RNTI to the user equipment, the or each of the said C-RNTIs selected from multiple C-RNTIs to enable collision free communication between the user equipment and respective ones of the primary and secondary nodes.

## Description

### TECHNICAL FIELD

The present invention relates to a method, in a radio communication system comprising a user equipment in dual connection with a primary node and a secondary node, a telecommunications system, a primary node, a secondary node and to a user equipment.

### BACKGROUND

Small Cells are low power, low-cost base stations that are able to provide cellular service in residential or enterprise environments, with a typical coverage range of tens of metres. They have auto-configuration and self-optimization capabilities that enable a simple plug and play deployment, and are designed to automatically integrate themselves into an existing macrocellular network. Small cells, often referred to as pico cells, or metro cells, typically use a customer's broadband internet connection, for example DSL, cable or the like, as backhaul towards the macrocellular network. Support of non-ideal backhaul (with one way latency of few milliseconds to few tens of milliseconds) between small cells and between small cell and macro cells is considered as the typical deployment scenario.

Small cell deployment for handling capacity needs in high traffic areas, such as hot spot areas, is an area of investigation. A proposal for handling capacity needs in high traffic areas is to provide dual connectivity support for user equipment. Dual connectivity support allows a User Equipment (UE) to be concurrently connected to a macro cell and a small cell, or to two small cells or to two macro cells for example. A UE can thus be connected to and served by more than one cell at a time. Dual connectivity support is considered as a way to enable offloading of traffic when required.

However, dual connectivity support raises a number of issues relating to identification of UE while maintaining the concept of having single Radio Resource Control ("RRC") connection to the network from a mobility control perspective.

### SUMMARY

According to an example, there is provided a method, in a radio communication system, for managing Cell Radio Network Temporary Identifiers ("C-RNTI") for use by a user equipment in dual connectivity with a primary node and a secondary node of the system, comprising assigning at least one C-RNTI to the user equipment, the or each of the said C-RNTIs selected from multiple C-RNTIs to enable collision free communication between the user equipment and respective ones of the primary and secondary nodes. The C-RNTI can be selected from a common reserved set of multiple C-RNTIs for use with the primary and secondary nodes of the system. The user equipment can be assigned first and second C-RNTIs for communication with the primary and secondary nodes of the system. The first C-RNTI can be used between the user equipment and the primary node of the system, and the second C-RNTI is used between the user equipment and the secondary node of the system. The C-RNTI can be selected by the primary node of the system, the method further comprising communicating, from the primary node to the secondary node, the selected C-RNTI.

According to an example, there is provided a radio telecommunication system comprising a primary node, a secondary node, a UE in dual connectivity with the primary node and a secondary node of the system, the system operable to assign at least one C-RNTI to the UE, the or each of the said C-RNTIs selected from multiple C-RNTIs stored for the system to enable collision free communication between the UE and respective ones of the primary and secondary nodes. The C-RNTI can be selected from a reserved set of multiple C-RNTIs for use with the primary and secondary nodes of the system. The C-RNTI can be selected from a common reserved set of multiple C-RNTIs for use with the primary and secondary nodes of the system. The set can be common and reserved between the primary and secondary nodes of the system. The user equipment can be assigned first and second C-RNTIs for communication with the primary and secondary nodes of the system. The first C-RNTI can be used between the user equipment and the primary node of the system, and the second C-RNTI is used between the user equipment and the secondary node of the system.

According to an example, there is provided a primary node of a radio telecommunication system as provided herein, operable in a dual connectivity link with a UE. According to an example, there is provided a secondary node of a radio telecommunication system as provided herein, operable in a dual connectivity link with a UE.

According to an example, there is provided a UE in dual connectivity with a primary node and a secondary node of a system as provided herein.

According to an example, there is provided a UE in dual connectivity with a primary node and a secondary node of a system, the UE operable in accordance with a method as provided herein.

According to an example, there is provided a computer program product, comprising a computer usable medium having computer readable program code embodied therein, said computer readable program code adapted to be executed to implement a method, in a radio communication system, for managing C-RNTIs for use by a user equipment in dual connectivity with a primary node and a secondary node of a system as provided herein.

### BRIEF DESCRIPTION OF THE DRAWINGS

Embodiments will now be described, by way of example only, with reference to the accompanying drawings, in which:
Figure 1 is a schematic representation of a heterogeneous telecommunications network comprising a macro cell and a cluster of small cells;
Figure 2 is a schematic representation of the process for allocation of a secondary identifier to UE during small cell configuration;
Figure 3 is a schematic representation of the process for allocation of a secondary identifier to UE during random access to the small cell;
Figure 4 is a schematic representation of a process for communication of reserved identifiers for dual connection capable UEs; and
Figure 5 is a schematic representation of a process for resolving identifier collision.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Typically, a legacy system depends on UE identification via a network allocated identifier while the UE is connected to the network. The identifier is allocated to the UE during initial access to the network, and when the UE moves to another cell of the network, a new one is allocated. The UE is addressed using the identifier for all communication between the UE and a node which assigns the identifier. Maintaining the same identifier is possible as the UE is connected to only one node at a time.

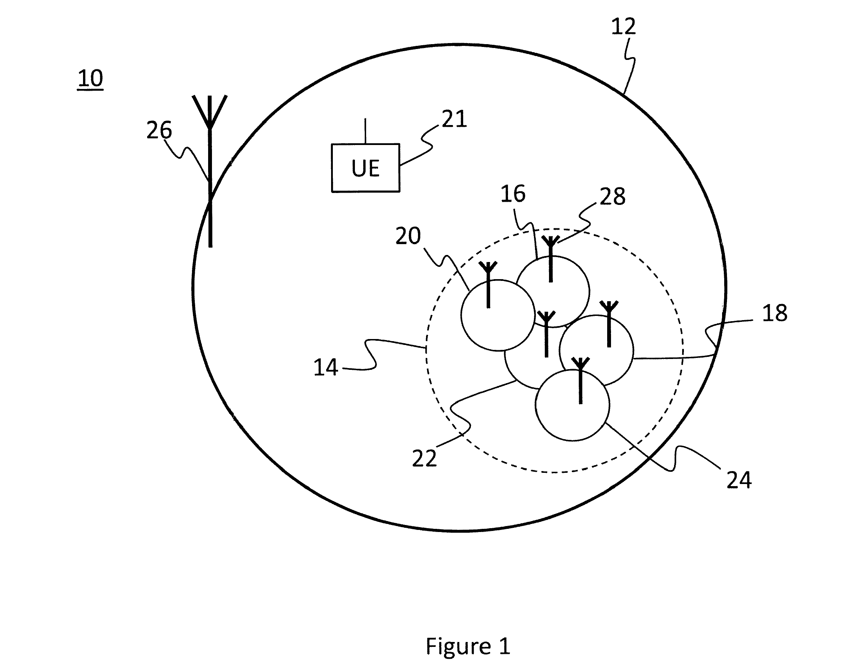

Figure 1 is a schematic representation of a heterogeneous telecommunications system 10 comprising a macro cell 12 and a cluster of small cells 14.

The cell 12 and respective ones of the cells in the cluster of small cells 14 are served by E-UTRAN Node Bs, also known as Evolved Node Bs (herein "eNB", also interchangeably referred to as "nodes") which form the hardware that is connected to the radio communication network that communicates directly with mobile handsets, known as user equipment (UE).

The cluster of small cells 14 comprises a first small cell 16, a second small cell 18, a third small cell 20, a fourth small cell 22 and a fifth small cell 24. The small cells are distributed geographically to provide an area of coverage within the macro cell 12. UE 21 may roam through the network 10. When the user equipment is located within the macro cell 12, communications may be established between the user equipment and the macro cell base station 26 over an associated radio link. If the user equipment is located geographically within one of the small cells 16, 18, 20, 22 and 24, communications may be established between the user equipment and the base station of the associated small cell over an associated radio link. It will be appreciated that Figure 1 shows only an example heterogeneous network and that a plurality of macro cells may be provided, more or less than five small cells may be provided and a plurality of small cell clusters may be provided.

As described above, within the macro cell 12, there is provided multiple small cell base stations which provide a plurality of small cells 16, 18, 20, 22, and 24. The small cells provide local communications coverage for a user in their vicinity. As a user equipment comes within range of a small cell, such as the first small cell 16, a handover may occur between the base station 26 of the macro cell and the base station 28 of the small cell, such as when the base station of the small cell detects that user equipment has come within range. Likewise, as a user equipment comes within range of a different small cell, a handover may occur between the base station of the current small cell and the base station of the new small cell when the base station of the new small cell detects that user equipment has come within range.

In order to handle the capacity needs of a high traffic area, a user equipment in the telecommunications network 10 of Figure 1 may be provided with dual connectivity support. That is, a user equipment may be connected to both the macro cell 12 and the small cell 16. Also, it should be appreciated that a user equipment may be dual connected to small cell 16 and any of the other small cells 18 to 24.

Dual connectivity as described with reference to figure 1 can be used to enable offloading of traffic via small cell when required. For example, a data flow associated with a specific service in use by the user equipment can be offloaded to a small cell in high traffic areas that may otherwise cause the macro cell 12 to become overloaded for example.

Thus, UE 21 can be connected to more than one cell at a time and the UE can therefore be served by more than one cell, which can belong to different eNBs from different vendors. A small cell need not only serve offloaded traffic for dual connected UEs but can also serve legacy UEs that are directly connected to the small cell. Typically, a UE connected to the network is identified using an identifier such as an allocated Cell Radio Network Temporary Identifier, or C-RNTI, which is allocated to the UE at its initial access to the network, and which can be changed using hand over procedures.

Even though the UE is connected to more than one cell, in some architecture solutions the UE may only have one RRC connection to the network. Where the RRC protocol for the UE is terminated only at one eNB, this eNB may also act as the center controller for mobility related signaling, thereby acting as a mobility anchor. From the UE and network communication perspective, there may be a need for multiple UE identification and/or recognition of multiple transmission paths. However, from the RRC connection perspective, the UE is identified by a single C-RNTI. According to an example, the concept of having a single RRC connection to the network from a mobility control perspective is preserved, whilst an independent UE identification can be assigned for the purpose of communication between a UE and different eNBs.

According to an example, a method for the management of C-RNTIs for the use with dual connected UEs is provided. In one example, there is provided a method of differentiation of primary and secondary C-RNTIs, where a primary C-RNTI is used as the identification of a UE from a mobility point of view, such as with respect to mobility anchoring and connected mode paging for example, as well as the identification of the UE to enable communication between the UE and a primary node. This can take the form of UE addressing in the physical control channel (PDCCH) and scrambling use for data transmission. A secondary C-RNTI can be allocated by a second node with which the UE is in dual communication, and can be used for the purposes of UE addressing and identification for communication between the UE and the second node for example.

In an alternative example, multiple C-RNTIs can be reserved for use with dual connected UEs. That is, a portion of the C-RNTI space can be reserved for the use of dual connection capable UEs. The reserved C-RNTI space can be communicated between any nodes involved in the dual connection.

Thus, in a dual connectivity scenario considered for small cell enhancement, a UE is connected to at least two eNBs (macro and small cell), which belong to different eNBs.

A macro eNB, such as 26, allocates a C-RNTI to UEs connected to it. Similarly a small cell eNB, such as one of the small cells in the cluster 14, allocates a C-RNTI to UEs connected to it. According to an example, a UE is connected to macro cell and when the UE is in the vicinity of small cell coverage, the macro node configures the UE for dual connectivity. As the UE has already been given a C-RNTI from the macro cell, and as the small cell is not aware of the allocated C-RNTI, the same C-RNTI may already have been allocated to a legacy UE connected to the small cell. To free up the C-RNTI allocated to the legacy UE, an intra-cell handover procedure would result in user plane interruption to the legacy UE.

According to an example, UE identification is separated from transmission path identification. A legacy C-RNTI (as considered in the legacy system) can be used for UE identification in the macro cell where centralized RRC for a dual connected UE is located. The same can also be used for UE transmission path identification for communication in the macro cell. A secondary C-RNTI is defined for transmission path identification for the UE in a small cell.

A primary C-RNTI has the same functionality and behaves in the same way as an identifier in a legacy network. The network identifies the UE based on the primary C-RNTI. When the UE is handed over to another eNB or in the case of UE arrival preparation in case of RRC re-establishment, the primary C-RNTI is used as the UE identification.

However, the procedure for UE paging for downlink data arrival in the case that it is out-of-synch while RRC connected is modified based on the transmission path. In one example, the UE can page using a primary C-RNTI. This is suitable in case the UE is out of synch in both a macro and a small cell/node, and where a multi-flow transmission is enabled where packets belong to the same radio bearer and are transmitted via both small cell and macro cell.

In another example, a UE pages using the appropriate C-RNTI. If the UE is out of synch with a small cell in question, and there is downlink data to be transmitted from the small cell, the UE is paged using a secondary C-RNTI, which triggers an uplink synchronization procedure for the secondary cell or both primary and secondary cells.

The main use of the secondary C-RNTI is UE identification and scrambling use for communication over a small cell. The UE is addressed using the secondary C-RNTI by PDCCH transmitted from the small cell PUCCH and PHICH of the small cell. PDSCH/PUSCH received/transmitted from/to the small cell is scrambled using the secondary C-RNTI.

The primary C-RNTI is configured during initial access of a UE and can be modified using a handover procedure. The secondary C-RNTI is allocated by the small (secondary) cell/node. This is done during a small cell configuration procedure. Alternatively, the secondary C-RNTI can be allocated to the UE directly by the small cell during random access to the small cell.

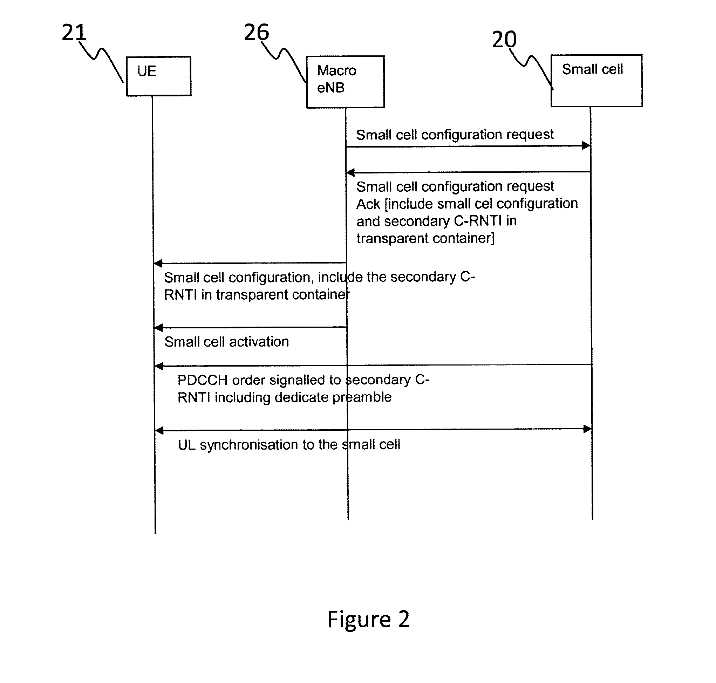

Figure 2 is a schematic representation of the process for allocation of a secondary identifier to UE during small cell configuration. A macro node 26 sends a small cell configuration request to a small cell 20, or any other of the small cells within a cluster 14 of small cells for example. An acknowledgement message can be returned by the small cell node to the macro cell. The acknowledgement includes small cell configuration and secondary identifier data in a transparent container. This data is forwarded by the macro cell to the UE 21. Small cell activation is initiated by the macro cell, and an order is signalled using the secondary C-RNTI including a dedicated preamble. Finally, uplink synchronisation to the small cell is provided.

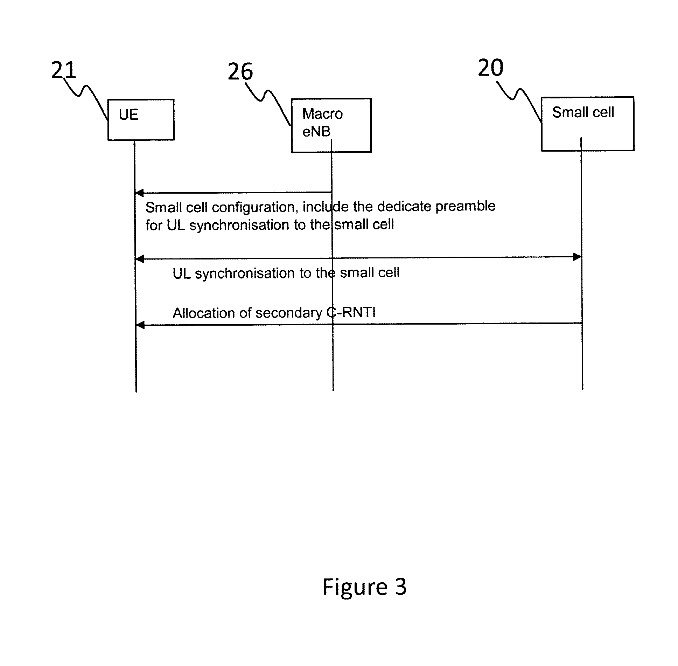

Figure 3 is a schematic representation of the process for allocation of a secondary identifier to UE during random access to the small cell. A small cell configuration request including a dedicated preamble for uplink synchronisation to a small cell 20 is sent from a macro eNB 26 to UE 21. Uplink synchronisation between the UE 21 and small cell 20 is provided, and a secondary identifier is allocated to UE 21 by the small cell 20.

In some radio communication system architectures, a centralized RRC protocol concept is followed. In this case RRC protocol is located at the macro eNB. The UE maintains RRC connection with the RRC entity at the macro eNB, and RRC maintains the UE context including at least the primary C-RNTI. The secondary C-RNTI may or may not be maintained by the central RRC. If the secondary C-RNTI is maintained, the secondary C-RNTI for the UE can be provided to the macro cell by the small cell. On the other hand, the secondary C-RNTI is to be used by the small cell for the communication between the UE and the small cell. Therefore, even though it is named a C-RNTI, it is merely used as transmission path identification for the UE. Thus the secondary C-RNTI can be kept at the small cell. Given that only the user plane protocols are present at the small cell according to this architecture, the secondary C-RNTI can also be considered a user plane transmission ID for the UE, and kept at user plane protocol layers, eg : PDCP, RLC or MAC layer for example. If the protocol architecture is such that RRC protocol is distributed between the macro and the small cell, secondary C-RNTI can be kept at the RRC layer located at the small cell.

According to alternative an example, the same C-RNTIs can be used in both cells, that is a macro cell and a small cell. A set of multiple C-RNTIs can be reserved or pre-allocated in cells that are in use or suitable for use with dual connection capable UEs. A macro will allocate a C-RNTI from the pre-allocated set to a dual connection capable UE. When dual connection is configured, the same C-RNTI in the small cell can be freed up for the use of the incoming dual connected UE (in the case that the same C-RNTI has been allocated to another dual connection UE from another eNB for example).

Note that multiple macro eNBs may have use of the same small cell for data offloading even though this method eliminates possible negative impacts on legacy UEs, the dual connection capable UEs may experience the user plane interruption due to the C-RNTI re-allocation. In addition new signalling between the involved eNBs is needed for the C-RNTI pool negotiation and also to resolve a conflict if the same C-RNTI has been allocated to more than one dual connection UE. RRC or Xn signalling could be used for the communication. The reserve C-RNTI pool for the use of dual connection UEs can also be hard coded in one embodiment.

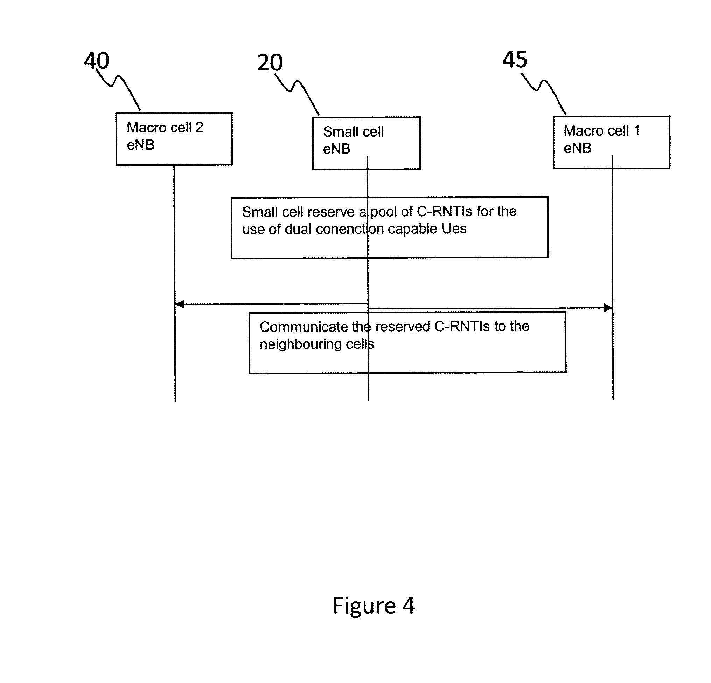

The signalling (either RRC or Xn protocol signalling) for the communication of a pool of C-RNTIs allocated for the dual connection UEs are shown in figure 4, which is a schematic representation of a process for communication of reserved identifiers for dual connection capable UEs.

A small cell 20 reserves a pool of C-RNTIs and communicates this to the neighbouring eNBs 40, 45. When a macro eNB 40, 45 or small cell eNB 20 allocates a C-RNTI to a dual connection capable UE, a C-RNTI from the reserved pool of C-RNTI is assigned to the UE. In an example, this means that the eNB which is in charge of the C-RNTI allocation will know the UE capability for dual connection. Thus for the handover case, the dual connection UE capability of the UE is communicated to the target eNB by the source eNB.

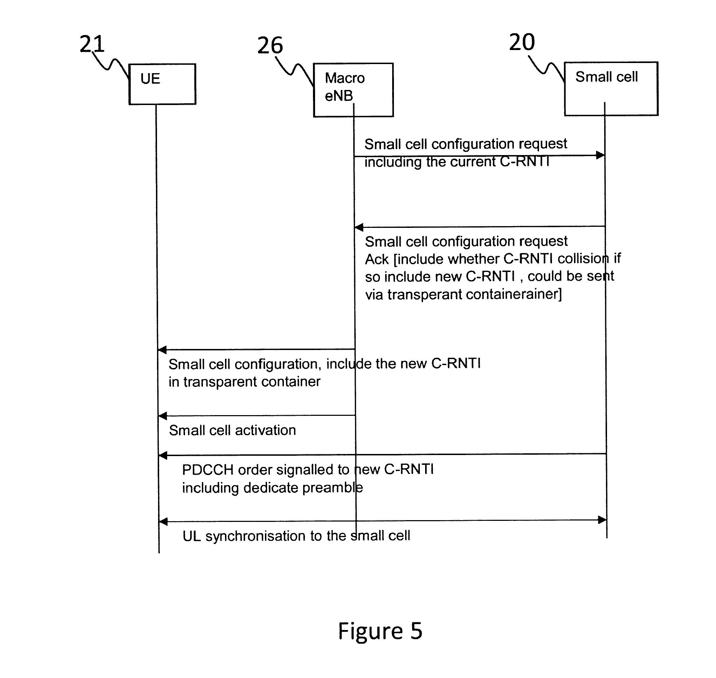

However, C-RNTI collision could still occur. For example, if the small cell allocated a C-RNTI for a UE connected to the small cell which is dual connection capable. The UE is single connected to the small cell. Thus there is no visibility of the UE in the neighbouring macro cell. The neighbouring macro cell also has a dual connection capable UE connected to the macro eNB. Again the UE is only connected to the macro cell. The same C-RNTI could be allocated independently for the UE in small cell and the UE in the macro cell. Both UEs moving thus require configuring dual connection towards the small cell and the macro cell. As both UEs have the same C-RNTI, one UE can be given a different C-RNTI during the dual connection configuration. A possible signalling flow for C-RNTI negotiation in the case of collision is shown in figure 5, which is a schematic representation of a process for resolving identifier collision.

A macro eNB 26 sends a small cell configuration request including the current C-RNTI to a small cell 20. The small cell 20 acknowledges the request and communicates data to the cell 26 indicating whether there is C-RNTI collision, and if so including a new C-RNTI, all of which can be sent in a transparent container. The macro cell 26 forwards the small cell configuration, including the new C-RNTI in the container to UE 21. Small cell activation is initiated, and a PDCCH order is signalled from the small cell 20 to the new C-RNTI including a dedicated preamble. Uplink synchronisation to the small cell is initiated.

A macro eNB 26 sends a small cell configuration request including the current C-RNTI to a small cell 20. The small cell 20 acknowledges the request and communicates data to the cell 26 indicating whether there is C-RNTI collision, and if so including a new C-RNTI. If the new C-RNTI is already used by another UE in the macro eNB, the macro eNB rejects the C-RNTI and request or suggests another C-RNTI. Thus the C-RNTI negotiation can be perfomed between the two eNBs. The macro cell 26 forwards the small cell configuration, including the new C-RNTI to UE 21. Small cell activation is initiated, and a PDCCH order is signalled from the small cell 20 to the new C-RNTI including a dedicated preamble. Uplink synchronisation to the small cell is initiated.

Thus, there is provided a method for providing user transmission path identification when the UE is connected to more than one node, such as when in dual connectivity with a primary node and a secondary node of a radio communication system. In an example, the UE is served by more than one independent scheduler located at different nodes and connected via a non-ideal backhaul link.

Although methods and systems here have been described with reference to C-RNTIs, it will be appreciated that other suitable identifiers can be used, and the above is not intended to be limiting. Rather, reference to a specific identifier, such as C-RNTI, is provided for the sake of clarity and brevity. Although methods and systems herein have been described with reference to macro eNB and small cell eNB, it will be appreciated that the invention can be used for UE identity allocation for dual connectivity towards two small cells or two macro cells for example.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method, in a radio communication system, for managing Cell Radio Network Temporary Identifiers ("C-RNTI") for use by a user equipment in dual connectivity with a primary node and a secondary node of the system, comprising:
assigning at least one C-RNTI to the user equipment, the or each of the said C-RNTIs selected from multiple C-RNTIs to enable collision free communication between the user equipment and respective ones of the primary and secondary nodes.

2. A method as claimed in claim 1, wherein the C-RNTI is selected from a reserved set of multiple C-RNTIs for use with the primary and secondary nodes of the system.

3. A method as claimed in claim 1, wherein the C-RNTI is selected from a common reserved set of multiple C-RNTIs for use with the primary and secondary nodes of the system.

4. A method as claimed in claim 1, wherein the user equipment is assigned first and second C-RNTIs for communication with the primary and secondary nodes of the system.

5. A method as claimed in claim 3, wherein the first C-RNTI is used between the user equipment and the primary node of the system, and the second C-RNTI is used between the user equipment and the secondary node of the system.

6. A radio telecommunication system (10) comprising:
a primary node (26);
a secondary node (16, 18, 20, 22, 24);
a UE (21) in dual connectivity with the primary node (26) and a secondary node (16, 18, 20, 22, 24) of the system (10);
the system operable to assign at least one C-RNTI to the UE (21), the or each of the said C-RNTIs selected from multiple C-RNTIs stored for the system (10) to enable collision free communication between the UE (21) and respective ones of the primary (26) and secondary nodes (16, 18, 20, 22, 24).

7. A system (10) as claimed in claim 6, wherein the C-RNTI is selected from a common reserved set of multiple C-RNTIs for use with the primary (26) and secondary nodes (16, 18, 20, 22, 24) of the system.

8. A system (10) as claimed in claim 6, wherein the UE (21) is assigned first and second C-RNTIs for communication with the primary (26) and secondary nodes (16, 18, 20, 22, 24) of the system.

9. A system (10) as claimed in claim 8, wherein the UE (21) communicates with the primary node (26) of the system using the first C-RNTI, and the UE (21) communicates with the secondary node (16, 18, 20, 22, 24) of the system using the second C-RNTI.

10. A system (10) as claimed in claim 7, wherein the primary node (26) of the system is operable to select the C-RNTI and communicate the selected C-RNTI to the secondary node (16, 18, 20, 22, 24).

11. A primary node (26) of a radio telecommunication system (10) as claimed in any of claims 6 to 10, operable in a dual connectivity link with a UE (21).

12. A secondary node (16, 18, 20, 22, 24) of a radio telecommunication system (10) as claimed in any of claims 6 to 10, operable in a dual connectivity link with a UE (21).

13. A UE (21) in dual connectivity with a primary node (26) and a secondary node (16, 18, 20, 22, 24) of a system (10) as claimed in any of claims 6 to 10.

14. A UE (21) in dual connectivity with a primary node (26) and a secondary node (16, 18, 20, 22, 24) of a system (10), the UE (21) operable in accordance with the method as claimed in any of claims 1 to 5.

15. A computer program product, comprising a computer usable medium having computer readable program code embodied therein, said computer readable program code adapted to be executed to implement a method, in a radio communication system, for managing C-RNTIs for use by a user equipment in dual connectivity with a primary node and a secondary node of the system as claimed in any of claims 1 to 5.
